# EUROPEAN PATENT APPLICATION

(11) **EP 3 680 513 A1**
(43) Date of publication of application: **15.07.2020**
(21) Application number: 17924333.2
(22) Date of filing: 07.09.2017
(51) Int. Cl.: F16H 1/32

(54) **WAVE BEARING FOR WAVE-MOTION GEAR DEVICE**

(71) Applicant: Harmonic Drive Systems Inc., Shinagawa-ku Tokyo 140-0013 (JP)
(72) Inventor: SHIROKOSHI Norio, Azumino-shi Nagano 399-8305 (JP)
(74) Representative: Schmitt-Nilson Schraud Waibel Wohlfrom Patentanwälte Partnerschaft mbB
(86) International application number: PCT/JP2017/032381
(87) International publication number: WO 2019/049296

(57) **Abstract**

A strain wave gearing (1) has a wave generator (4) that is provided with a rigid cam plate (6) and a wave bearing (8). The wave bearing is mounted between the elliptical outer peripheral surface (7) of the rigid cam plate (6) and the inner peripheral surface of an externally toothed gear (3) so as to support the rigid cam plate (6) and the externally toothed gear (3) in a relatively rotatable state. The wave bearing (8) is a full complement ball bearing provided with inner and outer races (9, 10) which are flexible in a radial direction. Since the wave bearing (8) is not provided with a retainer and the number of balls inserted in a ball raceway is not restricted by partition walls of such a retainer, the maximum number of balls can be mounted. Thus, the wave bearing (8) with a large load capacity can be realized, and reliability during high-load operation of the strain wave gearing (1) is enhanced.

## Description

### TECHNICAL FILED

The present invention relates to a strain wave gearing and, in particular, to a wave bearing of a wave generator in a strain wave gearing.

### BACKGROUND ART

A ball bearing, in which a large number of balls are held at regular intervals by a retainer between inner and outer races that can be flexed in a radial direction, is used as a wave bearing of a strain wave gearing. Patent Document 1 discloses a strain wave reduction gear provided with a wave bearing composed of a ball bearing.

### PRIOR ART DOCUMENTS

### PATENT DOCUMENTS

Patent document 1: JP 2017-36747 A

### SUMMARY OF THE INVENTION

### PROBLEMS TO BE SOLVED BY THE INVENTION

A wave bearing composed of a ball bearing has a retainer to hold adjacent balls at a constant interval. A retainer is provided with partitioning walls of a predetermined thickness arranged at constant intervals in a circumferential direction and a pocket for holding a ball is formed between each pair of adjacent partitioning walls. Accordingly, the number of balls that can be inserted between the inner and outer races is restricted by provision of the partitioning walls.

In a wave bearing disclosed in Patent document 1, the rated load (load capacity) is enhanced by reducing the distance between adjacent balls to increase the number of balls, whereby the lifetime thereof is prolonged. In other words, the thickness of the partitioning walls of the retainer is reduced so as to increase the number of balls. However, the number of balls is still limited by the partitioning walls of the retainer.

An object of the present invention is to provide a strain wave gearing which can enhance reliability thereof during high load operation by increasing load capacity of a wave bearing.

### MEANS OF SOLVING THE PROBLEMS

The present invention is characterized by employing, as a wave bearing of a strain wave gearing, a full complement ball bearing provided with inner and outer races flexible in a radial direction, to which attention has not been paid in the past.

Specifically, a strain wave gearing of the present invention has a rigid gear, a flexible gear, and a wave generator that makes the flexible gear to flex into a non-circular shape to partially mesh with the rigid gear and makes a meshing position of the flexible gear with respect to the rigid gear in a circumferential direction. The wave generator has: a rigid cam plate provided with a non-circular outer peripheral surface or a non-circular inner peripheral surface; and a wave bearing that is mounted between the non-circular outer peripheral surface and an inner peripheral surface of the flexible gear or between the non-circular inner peripheral surface and an outer peripheral surface of the flexible gear so as to support the rigid cam plate and the flexible gear in a relatively rotatable state. The wave bearing is a full complement ball bearing provided with inner and outer races that are flexible in a radial direction.

The wave bearing of the strain wave gearing according to the present invention is not provided with a retainer, so that adjacent balls are in contact with each other in a ball raceway between the inner and outer races. The rigid cam plate and the flexible gear are relatively rotated while adjacent balls come into rolling contact with each other. The number of balls mounted in the ball raceway between the inner and outer races is not limited by the partitioning walls of a retainer, so that the maximum number of balls can be mounted. Therefore, it is possible to realize a wave bearing having a large load capacity, whereby enhancing the reliability of the strain wave gearing during high load operation. The wave bearing of the present invention is particularly suited for a strain wave gearing which is driven in a low-speed and high-load operation.

In a wave bearing provided with a retainer, the inner and outer races are flexed into a non-circular shape by the rigid cam plate, but the retainer remains in an annular shape. The inner and outer races flexed in a radial direction must be limited in an amount of flexion to prevent from interfering with the retainer. In a case in which a strain wave gearing is designed to have a low reduction ratio, a rigid gear and a flexible gear both having a small number of teeth are employed, which causes the flexible gear to have an increased amount of flexion in the radial direction. Since the amount of flexion of the inner and outer races also increase, there arise a possibility that the inner and outer races interfere with the retainer. According to the present invention, the amount of flexion of the flexible gear can be increased without subject to limitation of interference between the retainer and the inner and outer races because no retainer is provided. Accordingly, the present invention is advantageous in applying to a strain wave gearing that is designed to have a low reduction ratio.

In order to insert balls into the ball raceway between the inner and outer races, one or both of the inner and outer races are formed with a semicircular notch for balls to be inserted into the ball raceway from outside of the inner and outer races.

### BRIEF DESCRIPTION OF THE DRAWINGS

FIG. 1A is a longitudinal cross-sectional view illustrating a cup-type strain wave gearing according to the present invention;
FIG. 1B is an end view of the strain wave gearing of FIG. 1A;
FIG. 2A is a longitudinal cross-sectional view illustrating a flat-type strain wave gearing according to the present invention;
FIG. 2B is an end view of the strain wave gearing of FIG. 2A;
FIG. 3A is an explanatory view illustrating a strain wave gearing according to the present invention;
FIG. 3B is an explanatory view illustrating a strain wave gearing according to the present invention; and
FIG. 3C is an explanatory view illustrating a strain wave gearing according to the present invention.

### MODE FOR CARRYING OUT THE INVENTION

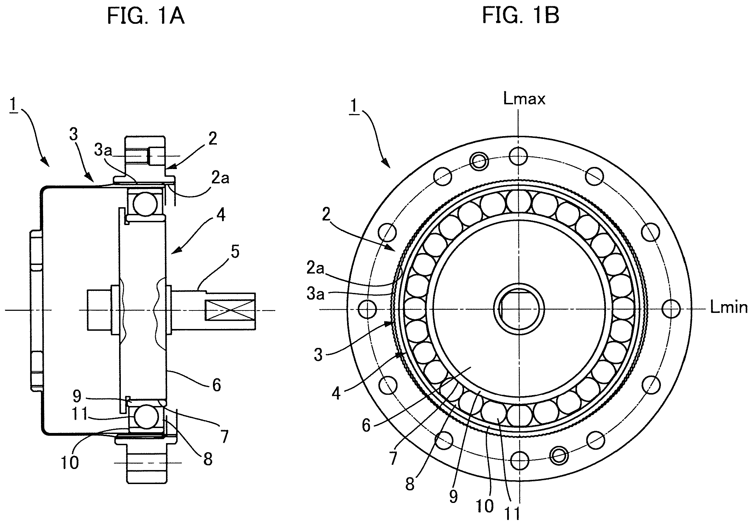

FIG. 1A is a longitudinal cross-sectional view illustrating an example of a cup-type strain wave gearing to which the present invention is applied, and FIG. 1B is an end view thereof. The present invention can also be applied to a top-hat type strain wave gearing in the same manner.

A strain wave gearing 1 according to the present embodiment has a rigid internally toothed gear 2 (rigid gear), a flexible externally toothed gear 3 (flexible gear) which has a cup shape and is arranged inside the internally toothed gear, and an elliptically-contoured wave generator 4 fitted inside the externally toothed gear. The externally toothed gear 3 has a cylindrical portion where external teeth 3a are formed, the cylindrical portion being flexed into an elliptical shape by the wave generator 4. The external teeth 3a located on both ends in a direction of a major axis Lmax of the elliptical shape are meshed with internal teeth 2a of the annular internally toothed gear 2.

The wave generator 4 is provided with a rigid cam plate 6 fixed to the outer peripheral surface of a rotational input shaft 5 and a wave bearing 8 mounted on an elliptical outer peripheral surface 7 (non-circular outer peripheral surface) of the rigid cam plate 6. The wave bearing 8 is fitted into the externally toothed gear 3 in a state of being flexed into an elliptical shape by the rigid cam plate 6. The wave bearing supports the externally toothed gear 3 and the rigid cam plate 6 in a relatively rotatable state.

The wave bearing 8 is composed of a full complement ball bearing, for example, a full complement deep groove ball bearing. Specifically, the wave bearing 8 is provided with a circular inner race 9 flexible in a radial direction, a circular outer race 10 flexible in a radial direction, and a plurality of balls 11 that are inserted in a rollable state into an annular ball raceway groove formed between the inner and outer races. The respective balls 11 are inserted into the ball raceway groove in a state in which adjacent balls 11 are in contact with each other. A semicircular notch (not shown) is formed in one or both of the inner race 9 and outer race 10 for the balls 11 to be inserted into the ball raceway groove from outside.

The rotational input shaft 5 of the wave generator 4 is connected to a motor shaft or other high-speed rotational input shaft (not shown). When the wave generator 4 rotates, a position of meshing between both gears 2 and 3 is caused to move in a circumferential direction, whereby generating a relative rotation between the both gears 2 and 3 due to the difference in the number of teeth therebetween. For example, the internally toothed gear 2 is secured so as not to rotate, the externally toothed gear 3 is connected to a load-side member, and reduced-speed rotation is derived from the externally toothed gear 3 and is transmitted to the load-side member.

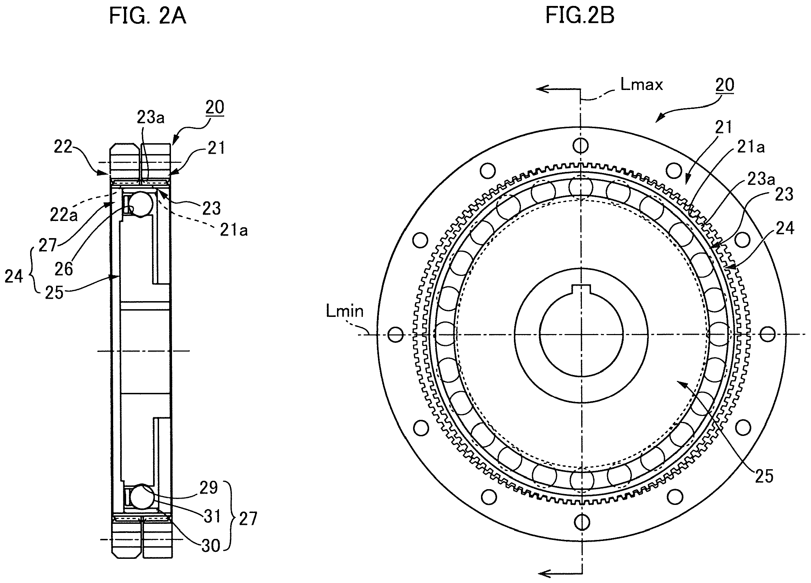

FIG. 2A is a longitudinal cross-sectional view illustrating an example of a flat-type strain wave gearing to which the present invention is applied, and FIG. 2B is an end view thereof.

A strain wave gearing 20 is provided, as a rigid internally toothed gear (rigid gear), with a first internally toothed gear 21 and a second internally toothed gear 22. The first and second internally toothed gears 21 and 22 are coaxially arranged in parallel, and a cylindrical flexible externally toothed gear 23 (flexible gear) is arranged inside the first and second internally toothed gears. A wave generator 24 having an elliptical contour is fitted inside the externally toothed gear 23. The wave generator 24 makes the externally toothed gear 23 to flex into an elliptical shape, and external teeth 23a on both end portions of a major axis Lmax of the elliptical shape are meshed with internal teeth 21a of the first internally toothed gear 21 and internal teeth 22a of the second internally toothed gear 22. For example, the number of teeth of the first internally toothed gear 21 is larger than that of the second internally toothed gear 22 by 2n (n is a positive integer), and the number of teeth of the externally toothed gear 23 is the same as that of the second internally toothed gear 22. The external teeth 23a are meshed with the internal teeth 21a and 22a at positions on the major axis Lmax of the elliptical shape of the externally toothed gear 23.

The wave generator 24 is provided with a rigid plug 25 and a wave bearing 27 mounted on an elliptical outer peripheral surface 26 of the rigid plug. The wave bearing 27 is composed of a full complement ball bearing and is provided with an inner-race raceway surface 29 formed on the elliptical outer peripheral surface of the rigid plug 25, a circular outer race 30 flexible in a radial direction, and a plurality of balls 31 inserted into an annular ball raceway groove formed between the inner-race raceway surface 29 and the outer race 30. The respective balls 31 are inserted into the ball raceway groove in a state in which adjacent balls 31 are in contact with each other.

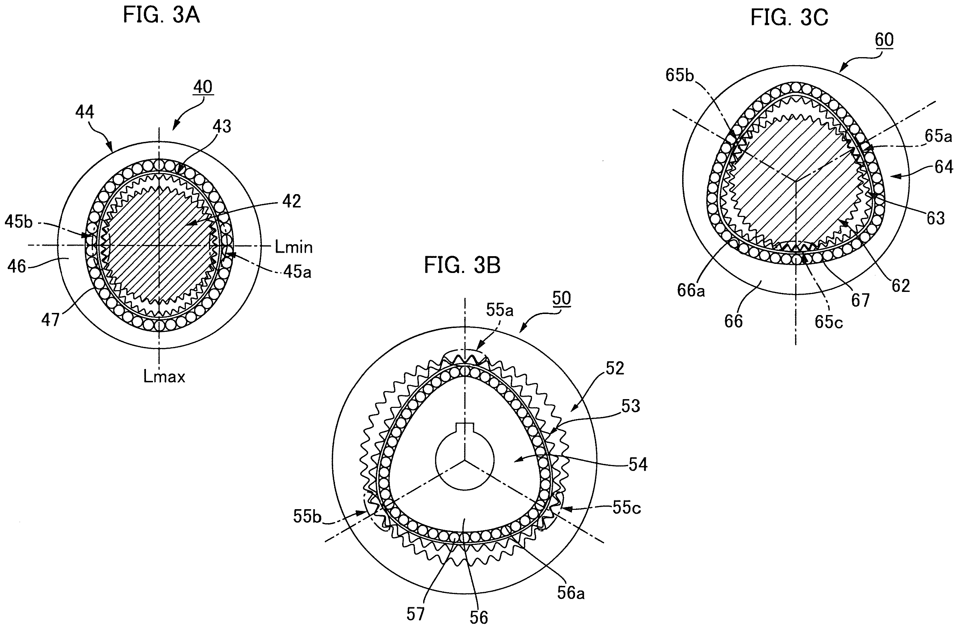

FIGS. 3A, 3B and 3C, respectively, are explanatory views illustrating examples of a strain wave gearing to which the present invention can be applied. Although the following description relates to a case in which the strain wave gearings illustrated in these drawings are employed as a cup-type or top-hat type strain wave gearing, the illustrated strain wave gearings can be employed as a flat-type strain wave gearing.

FIG. 3A illustrates a strain wave gearing 40 having a rigid externally toothed gear 42 (rigid gear) arranged on the innermost side thereof. An annular flexible internally toothed gear 43 (flexible gear) is arranged concentrically to surround the externally toothed gear 42. An annular wave generator 44 is arranged concentrically to surround the internally toothed gear 43. The internally toothed gear 43 is flexed into an elliptical shape by the wave generator 44. The internally toothed gear 43 flexed by the wave generator 44 is formed with meshing portions 45a and 45b with respect to the externally toothed gear 42 at two positions on both ends of a minor axis Lmin of the elliptical shape.

The wave generator 44 is provided with an annular rigid cam plate 46 and a wave bearing 47 mounted inside the rigid cam plate. The wave bearing 47 is composed of a full complement ball bearing. In the illustrated example, the wave bearing 47 has an outer race integrally formed on the rigid cam plate 46. For example, when the wave generator 44 is driven to rotate by a motor or other rotation drive source and the externally toothed gear 42 is secured so as not to rotate, meshing positions between both gears 42 and 43 are moved in a circumferential direction and a relative rotation due to the difference in the number of teeth between the both gears is generated therebetween. The thus obtained rotation can be taken out from the internally toothed gear 43.

FIG. 3B illustrates a strain wave gearing 50 which is provided with a rigid internally toothed gear 52 (rigid gear), a flexible externally toothed gear 53 (flexible gear) arranged inside the internally toothed gear, and a non-circular contoured wave generator 54 fitted inside the flexible externally toothed gear. The externally toothed gear 53 has a portion where external teeth are formed, the portion being flexed by the wave generator 54 into a non-circular shape.

The wave generator 54 is provided with a rigid cam plate 56 having a non-circular contour and a wave bearing 57 mounted on the outer periphery of the rigid cam plate. The wave bearing 57 is composed of a full complement deep groove ball bearing. The rigid cam plate 56 has a non-circular outer peripheral surface 56a defined by a closed curve that can be inscribed to a true circle at plural positions at equal intervals along a circumferential direction of the true circle. In this example, the non-circular outer peripheral surface 56a is a three-lobe shape defined by a closed curve that can be inscribed to a true circle at three equi-interval positions. It is also possible that the non-circular outer peripheral surface be defined by a closed curve that can be inscribed to a true circle at four or more positions at equal intervals.

The thus shaped wave generator 54 makes the externally toothed gear 53 to flex into a shape along the non-circular contour of the wave generator 54, whereby forming meshing portions 55a, 55b and 55c with respect to the internally toothed gear 52 at three positions at an equiangular interval of 120 degrees.

The wave generator 54 is connected with a motor shaft or other high-speed rotational input shaft. When the wave generator 54 is rotated, meshing positions between both gears 52 and 53 are moved in a circumferential direction to generate a relative rotation therebetween due to the difference in the number of teeth between these gears. For example, when the internally toothed gear 52 is secured so as not to rotate and the externally toothed gear 53 is connected to a load-side member, reduced-speed rotation is taken out from the externally toothed gear 53 and is transmitted to the load-side member. In this case, the difference in the number of teeth between the both gears 52 and 53 is set to 3n (n is a positive integer).

FIG. 3C illustrates a strain wave gearing 60, in which a flexible internally toothed gear 63 (flexible gear) is arranged outside of a rigid externally toothed gear 62 (rigid gear) and a wave generator 64 having a non-circular contoured inner peripheral surface is arranged on the outer peripheral side of the internally toothed gear 63.

The wave generator 64 is provided with a rigid cam plate 66 having a non-circular inner peripheral surface 66a and a wave bearing 67 mounted on the non-circular inner peripheral surface 66a. The wave bearing 67 is a full complement deep groove ball bearing. The non-circular inner peripheral surface 66a of the rigid cam plate 66 is defined by a closed curve that can circumscribe a true circle on plural positions at equal intervals in a circumferential direction of the true circle. In this example, the non-circular inner peripheral surface 66a is a three-lobe shape that can circumscribe a true circle at three equiangular interval positions in the circumferential direction of the true circle. It is also possible that the non-circular inner peripheral surface be defined by a closed curve that can circumscribe a true circle at four or more positions at equiangular intervals in the circumferential direction of the true circle.

The internally toothed gear 63 is flexed by the thus shaped wave generator 64 into a shape along the non-circular contour of the wave generator 64 and is formed with meshing portions 65a, 65b and 65c with respect to the externally toothed gear 62 at three positions at an angular interval of 120 degrees. For example, when the wave generator 64 is rotated by a motor or other rotation drive source and the externally toothed gear 62 is secured so as not to rotate, meshing positions between both gears 62 and 63 are moved in a circumferential direction and a relative rotation due to the difference in the number of teeth between these gears is generated therebetween. This rotation can be taken out from the internally toothed gear 63. In this case, the difference in the number of teeth between these gears 62 and 63 is set to 3n (n is a positive integer).

## Claims

1. A strain wave gearing comprising: a rigid gear; a flexible gear; and a wave generator for flexing the flexible gear into an non-circular shape to partially mesh with the rigid gear and moving a meshing position of the flexible gear with respect to the rigid gear in a circumferential direction of the rigid gear,
wherein the wave generator comprises: a rigid cam plate having a non-circular outer peripheral surface or a non-circular inner peripheral surface; and a wave bearing that is mounted between the non-circular outer peripheral surface and an inner peripheral surface of the flexible gear or between the non-circular inner peripheral surface and an outer peripheral surface of the flexible gear so as to support the rigid cam plate and the flexible gear in a relatively rotatable state, and
the wave bearing is a full complement ball bearing having a radially flexible inner race, a radially flexible outer race, and balls inserted between the inner and outer races in a state in which the balls arranged adjacent with each other are in contact with each other.

2. A strain wave gearing comprising: a rigid internally toothed gear; a flexible externally toothed gear; and a wave generator for flexing the flexible externally toothed gear into an elliptical shape to partially mesh with the internally toothed gear and moving a meshing position of the externally toothed gear with respect to the internally toothed gear in a circumferential direction of the internally toothed gear,
wherein the wave generator comprises: a rigid cam plate having an elliptical outer peripheral surface; and a wave bearing that is mounted between the elliptical outer peripheral surface and an inner peripheral surface of the externally toothed gear so as to support the rigid cam plate and the externally toothed gear in a relatively rotatable state, and
the wave bearing is a full complement ball bearing having a radially flexible inner race, a radially flexible outer race, and balls inserted between the inner race and outer race in a state in which the balls arranged adjacent with each other are in contact with each other.

3. The strain wave gearing according to claim 2,
wherein at least one of the inner race and the outer race is formed with a semicircular notch for the balls to be inserted into a ball raceway formed between the inner race and the outer race.
